# EUROPEAN PATENT APPLICATION

(11) **EP 4 697 692 A1**
(43) Date of publication of application: **18.02.2026**
(21) Application number: 25192943.6
(22) Date of filing: 30.07.2025
(51) Int. Cl.: H04M 1/80, H04M 1/72513, H04M 1/72469

(54) **CALL ENGAGEMENT WITH A LINKED COMPUTING DEVICE**

(30) Priority: 12.08.2024 US 202463682180 P; 10.07.2025 US 202519265882
(71) Applicant: Google LLC, Mountain View, CA 94043 (US)
(72) Inventor: Schetrit, Oren Ron, Mountain View, 94043 (US); Akella, Sri Satya Aravind, Mountain View, 94043 (US); Roh, Hane, Mountain View, 94043 (US); Liu, Yun Xiong, Mountain View, 94043 (US); Nguyen, Minh Vu, Mountain View, 94043 (US); Jin, Xiansha, Mountain View, 94043 (US); Park, Joseph Jin Hyuk, Mountain View, 94043 (US)
(74) Representative: Thorniley, Peter

(57) **Abstract**

A computing device determines a wearable computing device is communicably linked and receives an incoming phone call. While linked and responsive to the call, the computing device sends an instruction to the wearable computing device to display a user-selectable option to activate an ask-to-hold feature. Upon receiving input from the wearable indicating activation, the computing device connects the phone call and places it on hold. While the call is on hold, the computing device sends a message to the caller device, indicating the callee will be available momentarily. The computing device may then obtain a second input, indicating a user selection to join the call, whereupon the computing device removes the phone call from hold to exchange voice audio. This provides flexible call management from the linked wearable, enabling features such as dynamic countdown timers, AI-generated messages, and options to extend hold time or terminate the call.

## Description

### CLAIM OF PRIORITY

This application claims the benefit of US Provisional Patent Application No. 63/682,180, filed August 12, 2024, the entire contents of which is incorporated herein by reference.

### BACKGROUND

A smartphone is a handheld electronic device that combines the functionality of a mobile phone with advanced computing capabilities that enables users to access information at any place and at any time. Smartphones support voice calls, text messaging, and multimedia messaging. They also allow for internet-based communication through apps like email, social media, and messaging platforms. A smartwatch is a wearable electronic device designed to be worn on the wrist. The smartwatch may function as an extension of a smartphone or as an independent device with its own set of features. Smartwatches usually connect to smartphones via Bluetooth and are configured to receive notifications, messages, and calls directly on the watch. Some models have cellular capabilities, enabling them to operate both independently of a smartphone and in conjunction with a smartphone. Smartwatches generally include a touch-sensitive screen that displays information such as notifications, time, and app interfaces.

### SUMMARY

Techniques are directed to displaying contextually relevant "ask to hold" phone call-answering features to users via a wearable computing device (e.g., smartwatch, smart ring, smart bracelet, etc.). This approach allows a computing device, such as a smartphone, to manage an incoming phone call by determining if a wearable computing device is communicably linked, receiving the call, and then sending an instruction to the wearable computing device to output a user-selectable option to activate an ask-to-hold feature. Upon receiving first input from the wearable computing device indicating this feature was activated, the computing device connects the phone call and places it on hold. While the phone call is on hold, the computing device sends a message to the caller device, indicating the callee will be available momentarily. The disclosed techniques also enable obtaining a second input at the computing device, indicating a user selection to join the phone call, whereupon the computing device removes the call from hold to exchange voice audio. This provides flexible call management from a linked wearable, including options to extend hold time, send various messages, or terminate the call.

In one example, this disclosure describes a method that includes determining, by one or more processors of a computing device, a wearable computing device is communicably linked with the computing device. According to such an example, the method also includes receiving, by the one or more processors, a phone call at the computing device and while the computing device is communicably linked with the wearable computing device and in response to receiving the phone call at the computing device, the method includes sending, by the one or more processors, an instruction to the wearable computing device to output a user selectable option to activate an ask-to-hold feature. In at least one example, the method includes receiving, by the one or more processors, first input from the wearable computing device indicating the ask-to-hold feature was activated. Responsive to receiving the input from the wearable computing device indicating the ask-to-hold feature was activated, the method includes connecting, by the one or more processors, the phone call with the computing device and placing the phone call on hold. While the phone call is on hold and connected with the computing device, the method includes sending, by the one or more processors, a message to a caller device having originated the phone call indicating a callee will be available momentarily. While the phone call is on hold and connected with the computing device, the method includes obtaining, by the one or more processors, second input at the computing device indicating a user selection to join the phone call. Responsive to obtaining the second input at the computing device indicating the user selection to join the phone call, the method also includes removing, by the one or more processors, the phone call from hold and exchanging voice audio between the computing device and the caller device.

In another example, this disclosure describes a computing device that includes a memory and one or more processors implemented in circuitry in communication with the memory. The one or more processors may be configured to determine, by one or more processors of a computing device, a wearable computing device is communicably linked with the computing device. According to such an example, the instructions, when executed, may further configure the one or more processors to receive a phone call at the computing device. While the computing device is communicably linked with the wearable computing device and in response to receipt of the phone call at the computing device, the instructions, when executed, may further configure the one or more processors to send an instruction to the wearable computing device to output a user selectable option to activate an ask-to-hold feature. According to such an example, the instructions, when executed, may further configure the one or more processors to receive first input from the wearable computing device indicating the ask-to-hold feature was activated and responsive to receipt of the input from the wearable computing device indicating the ask-to-hold feature was activated, the instructions, when executed, further configure the one or more processors connect the phone call with the computing device and place the phone call on hold. While the phone call is on hold and connected with the computing device, the instructions, when executed, may further configure the one or more processors to send a message to a caller device having originated the phone call indicating a callee will be available momentarily. While the phone call is on hold and connected with the computing device, the instructions, when executed, may further configure the one or more processors to obtain a second input at the computing device indicating a user selection to join the phone call. Responsive to obtaining the second input at the computing device indicating the user selection to join the phone call, the instructions, when executed, may further configure the one or more processors to remove the phone call from hold and exchange voice audio between the computing device and the caller device.

In another example, this disclosure describes a non-transitory computer-readable storage medium encoded with instructions that, when executed by one or more processors, cause the one or more processors to determine a wearable computing device is communicably linked with the computing device. According to such an example, the instructions, when executed, may further configure the one or more processors to receive a phone call at the computing device and while the computing device is communicably linked with the wearable computing device and in response to receipt of the phone call at the computing device, send an instruction to the wearable computing device to output a user selectable option to activate an ask-to-hold feature. In at least one example, the instructions, when executed, further configure the one or more processors to receive first input from the wearable computing device indicating the ask-to-hold feature was activated. Responsive to receipt of the input from the wearable computing device indicating the ask-to-hold feature was activated, the instructions, when executed, may further configure the one or more processors to connect the phone call with the computing device and place the phone call on hold. While the phone call is on hold and connected with the computing device, the instructions, when executed, may further configure the one or more processors to send a message to a caller device having originated the phone call indicating a callee will be available momentarily. While the phone call is on hold and connected with the computing device, the instructions, when executed, may further configure the one or more processors to obtain a second input at the computing device indicating a user selection to join the phone call. Responsive to obtaining the second input at the computing device indicating the user selection to join the phone call, the instructions, when executed, may further configure the one or more processors to remove the phone call from hold and exchange voice audio between the computing device and the caller device.

The details of one or more examples are set forth in the accompanying drawings and the description below. Other features, objects, and advantages of the disclosure will be apparent from the description and drawings, and from the claims.

### BRIEF DESCRIPTION OF DRAWINGS

FIG. 1 is a conceptual diagram illustrating an ask-to-hold framework, in accordance with one or more aspects of the present disclosure.
FIG. 2 is a block diagram illustrating further details of an example mobile computing device (e.g., a smartphone), in accordance with one or more aspects of the present disclosure.
FIG. 3 is a block diagram illustrating further details of an example wearable computing device (e.g., a smartwatch), in accordance with one or more aspects of the present disclosure.
FIGS. 4A-4C are conceptual diagrams illustrating example graphical user interfaces and interactions, in accordance with one or more aspects of the present disclosure.
FIG. 5 is a conceptual diagram illustrating example graphical user interfaces, in accordance with one or more aspects of the present disclosure.
FIG. 6 is a flowchart illustrating example operations performed by an example computing device that is configured in accordance with one or more aspects of the present disclosure.

### DETAILED DESCRIPTION

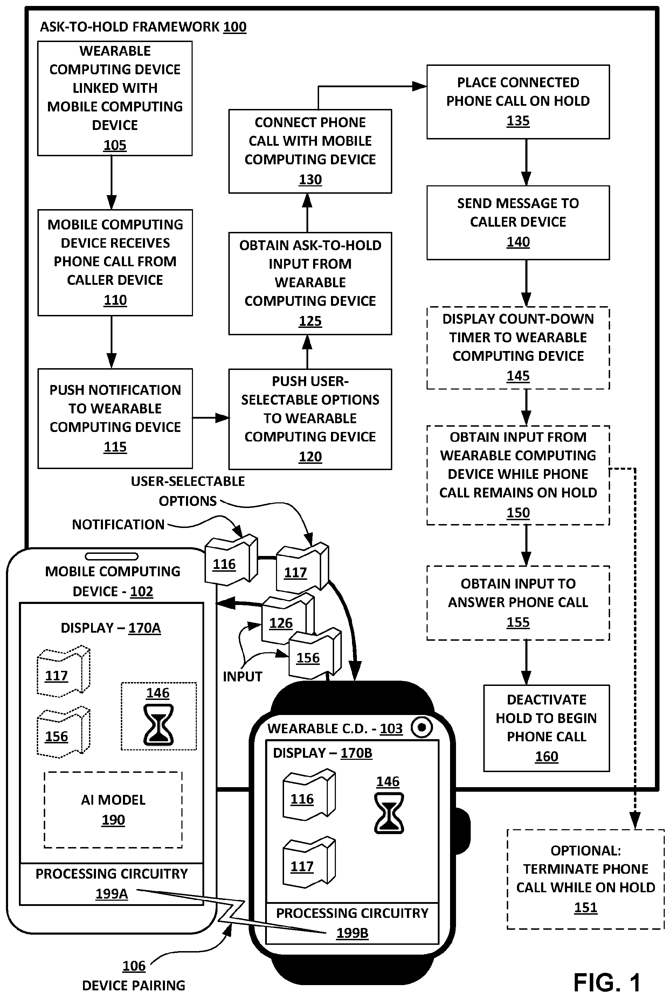

FIG. 1 is a conceptual diagram illustrating ask-to-hold framework 100, in accordance with one or more aspects of the present disclosure. As shown in FIG. 1, ask-to-hold framework 100 depicts various interactions between mobile computing device 102 (e.g., a smartphone) and wearable computing device 103 (e.g., a smartwatch).

In accordance with aspects of the disclosure, ask-to-hold framework 100 provides functionality that enables mobile computing device 102 to manage an incoming phone call. This includes providing notification 116 and user-selectable options 117 for display to a user's wearable computing device 103, indicating that a phone call is received by mobile computing device 102. Among user-selectable options 117 provided as output for display to wearable computing device 103, there is an option to activate an ask-to-hold feature. When this ask-to-hold feature is activated, mobile computing device 102 connects an incoming phone call with mobile computing device 102 and places the phone call on hold. While the phone call is connected with mobile computing device 102 and remains on hold, mobile computing device 102 sends a message to a caller device (not shown) that originated the phone call, indicating the party the caller is attempting to reach will be available momentarily. The message may be a text message or an audible message transmitted over a voice channel established by connecting the phone call with mobile computing device 102.

Ask-to-hold features of this disclosure provide different functionality than previously available features that primarily allow a user to decline an incoming phone call with a text message (e.g., "decline with message" features) because those features do not connect the incoming phone call with a smartphone. Specifically, aspects of disclosure describe techniques for connecting the smartphone with an incoming call from a caller device, placing the phone call on hold (while the smartphone remains connected with the phone call), and sending messages to the caller device while the smartphone is connected with the phone call from the caller device based on user-input obtained from the linked smartwatch. Such features are likewise distinct from previously available phone call hold features, as such features are not controllable from a linked smartwatch, nor do they enable user-selectable options displayed to a smartwatch to control a message transmitted back to the caller device.

Consider a first example where a user, having previously communicably interfaced (e.g., linked, paired) a mobile computing device (e.g., a smartphone) with a wearable computing device (e.g., a smartwatch). While working from home, such a user may leave their smartphone on their office desk while they get up and head to the kitchen to make a sandwich. While away from their desk, the user may receive a telephone call on their smartphone. Because the smartphone is linked with the smartwatch, the user may receive a notification of an incoming phone call on their smartwatch which is worn upon the user's wrist. The user may observe the notification of the incoming phone call and intend to accept the phone call, however, the user may require time to return to their home office in the next room to answer the call on their smartphone. Even if the smartwatch is capable of accepting the phone call and establishing a voice communication link between the user and the caller device from which the phone call originated, the user may nevertheless wish to answer the phone call via their smartphone. Alternatively, the user may wish to answer the phone call via the user's smartphone while utilizing headphones or earbuds. Regardless of the user's preferred mode of communication for the telephone call, an "ask to hold" feature provided by a phone application of the user's mobile computing device may enable the user to both accept the phone call while concurrently requesting a few extra moments of time to begin the phone call (such a feature may be referred to as "buy a minute"). This specific phrasing represents an instance of the ask-to-hold feature that provides a brief hold duration. In such an example, a phone application of the user's mobile may send instructions to the smartwatch to output for display to the user's smartwatch, user-selectable options for handling an incoming phone call. For instance, the user may select one of user-selectable options at a user interface of the smartwatch corresponding to an ask-to-hold feature. Subsequent to selection of an ask-to-hold user-selectable option at the smartwatch, the user's smartphone obtains input indicating an ask-to-hold feature was requested. Responsive to obtaining ask-to-hold input at the user's smartphone from the user's paired smartwatch, the user's smartphone connects the incoming phone call with the smartphone and places the connected phone call on hold. A phone application of the user's smartphone may also send a message to the caller device having originated the phone call, such as a text message to the caller device and/or a computer-generated message over a voice channel from the user's smartphone to the caller device indicating the user will be with the caller momentarily. In this example, the user ultimately returns to their office desk and interacts with their smartphone indicating they are ready to begin the phone call. While the phone call is already connected with the user's smartphone, the phone call is taken off hold (e.g., hold is deactivated) and the user then begins the phone call.

Consider a second example where a user has again previously communicably interfaced (e.g., linked, paired) their mobile computing device (e.g., a smartphone) with their wearable computing device (e.g., a smartwatch). While working from their favorite noisy and bustling coffee shop, the user receives a telephone call on their smartphone. The user receives a notification of an incoming phone call on their smartwatch indicating the caller is identified as their healthcare provider, possibly calling to deliver the results of a recent healthcare screening the user undertook. Desirous of privacy and a quiet space to speak on the phone, but not wanting to miss the phone call, the user may select an option on their smartwatch to "buy a minute" by requesting, via a user-selectable option displayed to the user's smartwatch, the telephone call to be placed on hold momentarily while the user seeks a quiet and private location to speak. Subsequent to the user selecting the user-selectable "ask-to-hold" option at an interactive display interface of the smartwatch, the user's smartphone obtains input indicative of the user's selection and responsively accepts the phone call (e.g., connects the phone call) at the smartphone and places the phone call on hold. The user's smartphone may also send a text message and/or an audible message over the voice communication channel to the caller device indicating the user (callee) will be with the caller shortly. Once the user has relocated to a quieter and more private location, the user may begin the phone call which is already connected and currently on hold, by selecting a user-selectable option at the user's smartwatch or smartphone to begin the phone call. Responsive to obtaining the user-selectable input to begin the phone call, the user's smartphone responsively takes the previously connected telephone call off hold to resume the telephone call in a normal call mode (e.g., permitting bi-directional voice communications between the caller at the caller device and the callee at the smartphone).

Consider a third example where a user has again previously communicably interfaced (e.g., linked, paired) their mobile computing device (e.g., a smartphone) with their wearable computing device (e.g., a smartwatch). While traveling on vacation and relaxing at a beach on a lounge chair under an umbrella, the user gets up and meanders away from their lounge chair to wade in the ocean surf. While strolling through the water, the user receives a telephone call on their smartphone. The user, wearing a paired smartwatch upon their wrist, receives a notification of an incoming phone call on their smartwatch indicating their mother-in-law is calling, possibly to remind the user they had promised to come over to their mother-in-law's home to carry several large boxes of family photo albums and dusty slide carousels in from the garage and then help sort them chronologically. The user once again selects an option at the touch-sensitive display interface of their smartwatch to "buy a minute" by interacting with an icon corresponding to an ask-to-hold feature. Subsequent to the user selecting the user-selectable ask-to-hold option via the user's smartwatch, the user's smartphone obtains input indicative of the user's selection and responsively connects the phone call with the user's smartphone and places the phone call on hold. The user's smartphone may also send a text message and/or an audible message to the caller device indicating the user (callee) will be with the caller shortly. Upon the user returning back to their lounge chair and retrieving their smartphone, but prior to selecting an icon to begin the phone call, the user indicates via user-selectable input an option to decline the phone call with a message. Responsive to obtaining the user-selectable input to decline the phone call with a message, the user's smartphone, having previously connected the phone call and placed the phone call on hold, responsively sends a message indicating the user is unable to answer the phone call at the present moment and terminates the phone call (e.g., hangs up on the caller). The message may be an audible message transmitted over the voice channel to the caller prior to terminating the phone call or the message may be a text message sent via a separate communication channel (e.g., SMS, MMS, RCS, iMessage, etc.) transmitted before, after, or concurrent with terminating the telephone call previously connected with the smartphone and placed on-hold. This capability of sending a message after the call is connected and on hold, which then leads to termination, provides an enhanced call management option compared to other systems that send such a message before connecting the call. The message (audible or text) may be an Artificial Intelligence model (AI model) generated message, an AI model suggested message selected by the user, a pre-configured message, or a user-specified message input at the time of declining the previously accepted call.

In each of the three examples above, optional features may be provided, which includes outputting for display to the user's smartwatch a countdown timer, optionally displaying the countdown timer to the user's smartphone, and providing a user-selectable option to extend or reset the countdown timer from the user's smartwatch. In some examples, when the countdown timer expires, the user's smartphone may send a second message to the caller indicating the user is unable to speak via telephone at the moment and automatically terminate the phone call which was previously accepted, connected with the user's smartphone, and placed on hold.

Other optional features which may be provided with each of the above three examples include playing on-hold music while the caller device is connected with the user's smartphone but on hold and optionally sending a second message (e.g., audible and/or text) to the caller while on-hold with the user's smartphone indicating the user will be with the caller shortly via a same message as the first message or via a different message. In some examples, the first or second message sent to the caller device may be contextually relevant to the user's smartphone and/or smartwatch, such as indicating the user has stepped away from their phone but will answer the call momentarily, or indicating the user is relocating to a quieter and/or more private location, or indicating that the user is simply unable to reach their phone at the present moment.

Mobile computing device 102 may implement artificial intelligence (AI) model 190 to generate context-aware messages for transmission to a caller device. For instance, such messages may reference contextual information available to AI model 190, such as a user's name or location (e.g., a text or an audible message indicating "Thank you for your patience, John Doe will be with you momentarily" or "Please wait while the party you are attempting to reach moves to a quieter location"). Additional or different context may be provided to AI model 190 based on user-selectable prompts displayed to display 170A of mobile computing device 102 and/or display 170B of wearable computing device 103, such as "Tell the caller I need to locate my phone," "Tell the caller I need to find a location with more privacy," or "Tell the caller I will answer in 30 seconds." AI model 190 may include machine learning (ML) models, chatbots, generative pre-trained transformer (GPT) models such as Gemini, large language models (LLMs), natural language processing (NLP) models, computer vision models for object recognition and classification, graphics-based search models, or image generation models for outputting computer-generated visual information responsive to written prompts. Mobile computing device 102 may provide input, such as user-context via user-selectable prompts, to an AI model 190 installed locally and executing locally at mobile computing device 102. In other examples, mobile computing device 102 may provide user context information associated with mobile computing device 102 to an artificial intelligence model 190 executing at a third-party cloud platform communicably interfaced with mobile computing device 102 over a public Internet. In such a way, mobile computing device 102 may utilize a locally installed AI model 190, a remote AI model 190, or both, as needed.

With continued reference to FIG. 1, ask-to-hold framework 100 includes various blocks illustrating an example interaction flow for activating and utilizing the ask-to-hold features described in accordance with aspects of disclosure.

Initially, processing circuitry 199A of mobile computing device 102 determines that wearable computing device 103 is linked with mobile computing device 102 (105). Linking operations may include, for example, pairing wearable computing device 103 with mobile computing device 102 via device pairing 106 or otherwise communicably interfacing wearable computing device 103 with mobile computing device 102.

While wearable computing device 103 is linked with mobile computing device 102, mobile computing device 102 receives a phone call from a caller device (110). For instance, a user at another caller device places a telephone call to the user's mobile computing device 102 or otherwise originates a telephone call to the user's mobile computing device 102. Mobile computing device 102 may receive an incoming telephone call from a Plain Old Telephone Service (POTS) network via traditional telephone networks using analog technology over a standard telephone network, or mobile computing device 102 may receive a Voice over Internet Protocol (VoIP) telephone call enabling voice communication to be transmitted over the Internet or other IP-based networks. Mobile computing device 102 may also receive an incoming telephone call from another mobile computing device over a cellular-based or satellite-based telephone network, or mobile computing device 102 may receive a telephone call from a video teleconferencing platform, a work-based comprehensive collaboration and communication platform, or a mobile computing device 102-based messaging application.

Regardless of the manner in which the telephone call is originated or transmitted to mobile computing device 102, responsive to receiving the incoming phone call from the caller device (110), mobile computing device 102 pushes notification 116 to wearable computing device 103 (115) indicating the incoming telephone call is being received. Such an incoming telephone call may cause mobile computing device 102 to "ring" or otherwise alert in a traditional manner and concurrently push notification 116 to a user's device paired 106 or linked wearable computing device 103, indicating the incoming phone call is being received.

Processing circuitry 199A of mobile computing device 102 may send instructions to wearable computing device 103 to output various user-selectable options 117 to display 170B of wearable computing device 103 (120). Processing circuitry 199B of wearable computing device 103 may display these user-selectable options 117 using display 170B. Such user-selectable options 117 may optionally be displayed to display 170A of mobile computing device 102. User-selectable options 117 may include, for example, an option to decline the incoming telephone call outright without accepting or connecting mobile computing device 102 with the telephone call, an option to decline the incoming telephone call with a text message transmitted to the caller device (without ever connecting the incoming telephone call with mobile computing device 102), or an option to activate the ask-to-hold feature via ask-to-hold framework 100. This user-selectable option 117, if selected, requests the caller to hold momentarily.

When the ask-to-hold feature is selectively activated, an incoming phone call is connected with mobile computing device 102 and placed on hold, and a message is transmitted to a caller. This message may be an audible message over a voice communications channel established via the phone call with the caller, or a text message to the caller device indicating the called party will begin the phone call momentarily. While the phone call is connected with mobile computing device 102 and is on hold, the caller cannot hear or speak to a user of mobile computing device 102, and the user of mobile computing device 102 cannot hear or speak to the caller. However, the voice channel is connected with mobile computing device 102 and remains available via the connected phone call even while on hold. Thus, mobile computing device 102 may play hold music over the voice channel to the caller and/or transmit audible messages (e.g., AI model 190 generated spoken language messages or other pre-configured spoken language messages) to the caller via the connected phone call.

Responsive to a user interacting with user-selectable option 117 to activate the ask-to-hold feature, ask-to-hold framework 100, using processing circuitry 199A of mobile computing device 102, obtains ask-to-hold input from wearable computing device 103 (125). In response to obtaining ask-to-hold input from wearable computing device 103, ask-to-hold framework 100, using processing circuitry 199A of mobile computing device 102, connects the phone call with mobile computing device 102 (130) and places the connected phone call on hold (135). Before, after, or concurrently with placing the connected phone call on hold, ask-to-hold framework 100, using processing circuitry 199A of mobile computing device 102, sends a message to the caller device (140). The message sent to the caller by ask-to-hold framework 100 may be an audible message transmitted by mobile computing device 102 over the voice channel of the connected telephone call to the caller while the phone call with the caller remains on hold. For instance, AI model 190 may generate contextually relevant spoken responses and transmit the responses to the caller via the connected phone call. In other examples, pre-recorded messages or computer-generated text-to-speech messages may be transmitted to the caller via the connected phone call. In yet other examples, ask-to-hold framework 100 transmits text messages from mobile computing device 102 to the caller device, such as transmitting an SMS, MMS, RCS, or other type of text message. Such messages may indicate to the caller that the party they are trying to reach (e.g., the user of mobile computing device 102) will join the call shortly.

Optionally, ask-to-hold framework 100 may generate output to display 170B of wearable computing device 103, a countdown timer 146 (145). Countdown timer 146 may optionally be output to display 170A of mobile computing device 102 in addition to displaying countdown timer 146 to wearable computing device 103. Aspects of disclosure additionally describe techniques for visually displaying (e.g., to output for display) to a communicably interfaced smartwatch, a dynamically updating countdown timer, indicating a period of time remaining to maintain the caller device on hold, and visually displaying to a communicably interfaced smartwatch countdown timer extension options.

According to certain examples, while ask-to-hold framework 100 displays countdown timer 146 to display 170B of wearable computing device 103 (and optionally to display 170A of mobile computing device 102), ask-to-hold framework 100 may obtain input from wearable computing device 103 (e.g., second input obtained subsequent to obtaining the ask-to-hold input as first input) while the phone call remains on hold (150). For instance, ask-to-hold framework 100 may display to wearable computing device 103 user-selectable options 117 enabling a user to selectively extend countdown timer 146, reset countdown timer 146 to its initial value, stop countdown timer 146, or dismiss countdown timer 146 without terminating the phone call. When ask-to-hold framework 100 obtains input from wearable computing device 103 while the phone call remains on hold (150) indicating the user has selectively extended, reset, stopped, or dismissed countdown timer 146 (output to display 170B of wearable computing device 103 or optionally output to display 170A of mobile computing device 102), ask-to-hold framework 100 may optionally transmit a second message to the caller via text message or audible message further indicating the party the caller is attempting to reach will join the call shortly.

Other user-selectable options may be selected by a user interacting with wearable computing device 103 and/or mobile computing device 102. For instance, while ask-to-hold framework 100 displays countdown timer 146 to display 170B of wearable computing device 103 (and optionally mobile computing device 102), ask-to-hold framework 100 may obtain input 156 from wearable computing device 103 while the phone call remains on hold (150), indicating the user has selectively activated an optional terminate phone call while on hold (151) feature. Responsive to this input, ask-to-hold framework 100 may terminate the phone call from its connection with mobile computing device 102. In such an example, and based on the preference and indication by the user, ask-to-hold framework 100 may terminate the phone call without further message sent to the caller or may terminate the phone call with a message. For instance, a text message may be sent to the caller before, after, or concurrent with terminating the phone call which remains on hold. Alternatively, ask-to-hold framework 100 may transmit an audible message to the caller over the voice channel of the phone call connected with mobile computing device 102 while the phone call remains on hold, subsequent to which, ask-to-hold framework 100 will terminate the phone call. Such a message may indicate, for example, that the party the caller is attempting to reach will not be able to join the phone call. Aspects of disclosure additionally describe techniques for visually displaying to a communicably interfaced smartwatch user-selectable options to terminate the phone call after placing the call on hold.

Conversely, while ask-to-hold framework 100 displays countdown timer 146 to display 170B of wearable computing device 103 (and optionally mobile computing device 102), ask-to-hold framework 100 may obtain input 156 from wearable computing device 103 (or from mobile computing device 102) to answer the phone call (155). For instance, a user may selectively activate the ask-to-hold feature from wearable computing device 103 upon receiving an incoming phone call. Upon retrieving their mobile computing device 102, the user may select at mobile computing device 102 or wearable computing device 103 a user-selectable option 117 providing input 156 to answer the phone call (155). Responsive to obtaining input 156 to answer the phone call (155) while the phone call remains on hold and connected with mobile computing device 102, ask-to-hold framework 100 responsively deactivates the hold on the phone call (e.g., resumes the phone call previously placed on hold) to begin the phone call (160), thus permitting the user of mobile computing device 102 to join the phone call previously connected with mobile computing device 102.

According to certain examples in accordance with aspects of the disclosure, subsequent to activating the ask-to-hold feature via wearable computing device 103, a user may selectively activate a feature to cause mobile computing device 102 to emit an audible alert. For instance, a user may interact with an icon or other user-selectable "find my phone" feature output to display 170B of wearable computing device 103 to trigger an audible alert, such as an audible beacon or homing signal, to emanate from mobile computing device 102. This enables the user to more easily locate mobile computing device 102 linked with wearable computing device 103. Such a feature may be helpful to a user that has physically moved some distance from their mobile computing device 102 or otherwise temporarily lost their linked mobile computing device 102. Ask-to-hold framework 100 may push a user-selectable option 117 to wearable computing device 103 enabling the activation of this "find my phone" feature responsive to the user activating the ask-to-hold feature from wearable computing device 103. The user may elect to activate the feature or simply ignore the option. Aspects of disclosure additionally describe techniques for visually displaying to a communicably interfaced smartwatch user-selectable options to trigger from a linked smartwatch, an audible phone locating signal to be audibly emanated from the linked smartphone.

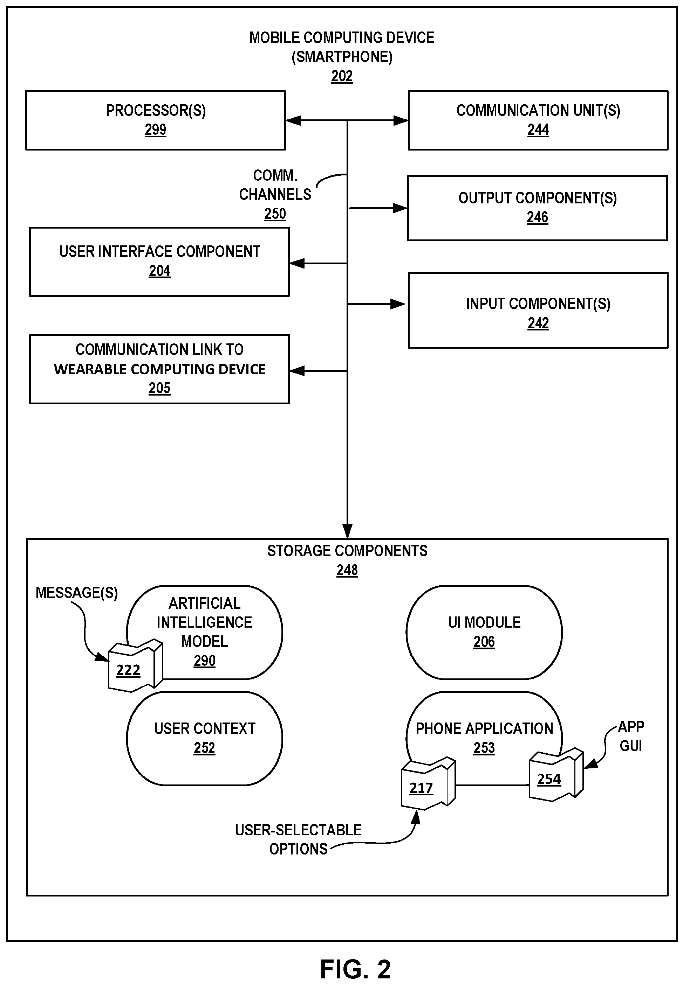

FIG. 2 is a block diagram illustrating further details of an example mobile computing device 202 (e.g., a smartphone), in accordance with one or more aspects of the present disclosure. Mobile computing device 202 of FIG. 2 is described below as an example of mobile computing device 102 (e.g., a smartphone) as illustrated in FIG. 1.

Mobile computing device 202 may be an example of various computing devices, such as a smartphone, a mobile phone, a tablet computer, a laptop computer, a desktop computer, a server, a mainframe, a set-top box, a television, a home automation device or system, a gaming system, a media player, an e-book reader, a mobile television platform, an automobile navigation or infotainment system, or any other type of mobile computing device configured to communicate with a network, such as a local network or a public Internet. FIG. 2 illustrates one particular example of mobile computing device 202, and other examples of mobile computing device 202 may be used in other instances. Such other examples may include a subset of components included in example mobile computing device 202 or may include additional components not shown in FIG. 2.

As shown in the example of FIG. 2, mobile computing device 202 includes user interface component (UIC) 204, one or more processors 299, one or more input components 242, one or more communication units 244, one or more output components 246, a communication link to wearable computing device 205 (e.g., such as device pairing 106), and one or more storage components 248. Storage components 248 of mobile computing device 202 may also include user interface (UI) module 206, artificial intelligence (AI) model 290 enabled to provide contextually relevant messages and message options for transmission to a caller, user context 252, and phone application 253. Phone application 253 may be enabled to provide application graphical user interface (GUI) 254 and to provide, as output for display to wearable computing device 103 (of FIG. 1), one or more user-selectable options. User-selectable options 217 may be provided as, for example, one or more suggested messages, selectable by a user via application GUI 254.

One or more processors 299 are one example of processing circuitry 199A of FIG. 1. UI module 206, as shown in the example of FIG. 2, may be operable by mobile computing device 202 to perform one or more functions, such as receiving input and sending indications of such input to other components associated with mobile computing device 202, including AI model 290, wearable computing device 103 linked via communication link to wearable computing device 205, and/or available application modules. UI module 206 may also receive data from components associated with mobile computing device 202, such as AI model 290 and/or available application modules. Using the data received, UI module 206 may cause other components associated with mobile computing device 202, such as UI component 204, to provide output based on the data. For instance, UI module 206 may receive data from AI model 290, user context 252, and/or a communicably interfaced wearable computing device 103 to display a graphical user interface (GUI).

Communication link to wearable computing device 205 is an example of device pairing 106 of FIG. 1. AI model 290 is an example of AI model 190 of FIG. 1. Messages 222 may be an example of user selectable options 117 of FIG. 1, which may be output for display to mobile computing device 202 (e.g., mobile computing device 102 of FIG. 1) and/or wearable computing device 103 of FIG. 1. User-selectable options 217 may be an example of user-selectable options 117 of FIG. 1. Application GUI 254 may enable output to display 170A of mobile computing device 102 and/or display 170B of wearable computing device 103 of FIG. 1.

Communication channels 250 may interconnect each of components 299, 204, 205, 244, 246, 242, and 248 for inter-component communications (e.g., physically, communicatively, and/or operatively). In some examples, communication channels 250 may include a system bus, a network connection, an inter-process communication data structure, or any other method for communicating data.

One or more input components 242 of mobile computing device 202 may receive input. Examples of input include tactile input, an audio input, and a video input. One or more input components 242 of mobile computing device 202, in one example, may include a presence-sensitive display, a touch-sensitive screen, a mouse, a keyboard, a voice responsive system, a video camera, a microphone, or any other type of device for detecting input from a human or a machine.

One or more output components 246 of mobile computing device 202 may generate output. Examples of output include tactile output, an audio output, and a video output. One or more output components 246 of mobile computing device 202, in one example, may include a presence-sensitive display, a sound card, a video graphics adapter card, a speaker, a liquid crystal display (LCD), a light-emitting diode (LED) display, a miniLED display, a microLED display, an organic light-emitting diode (OLED) display, a light field display, haptic motors, linear actuating devices, or any other type of device for generating output to a human or a machine.

One or more communication units 244 of mobile computing device 202 may communicate with external devices, including wearable computing device 103 via communication link to wearable computing device 205, via one or more wired and/or wireless networks by transmitting and/or receiving network signals on one or more networks. Examples of one or more communication units 244 include a network interface card (e.g., an Ethernet card), an optical transceiver, a radio frequency transceiver, a GPS receiver, or any other type of device that can send and/or receive information. Other examples of one or more communication units 244 may include short wave radios, cellular data radios, wireless network radios, as well as universal serial bus (USB) controllers.

UIC 204 of mobile computing device 202 may be hardware that functions as an input and/or output device for mobile computing device 202. For example, UIC 204 may include a display component, which may be a screen at which information is displayed by UIC 204, and a presence-sensitive input component that may detect an object at and/or near a display component of mobile computing device 202. The display component may be considered a display device.

One or more processors 299 may implement functionality and/or execute instructions within mobile computing device 202. For example, one or more processors 299 on mobile computing device 202 may receive and execute instructions stored by storage components 248 that execute the functionality of ask-to-hold framework 100 of FIG. 1. This may include activating the ask-to-hold feature, generating output for display to mobile computing device 202 and/or wearable computing device 103, and executing artificial intelligence model 290. The instructions executed by one or more processors 299 may cause mobile computing device 202 to store information within storage components 248 during program execution. Examples of one or more processors 299 include application processors, display controllers, sensor hubs, and any other hardware configured to function as a processing unit. One or more processors 299 may execute instructions of UI module 206 and artificial intelligence model 290 to perform actions or functions. That is, UI module 206 and artificial intelligence model 290 may be operable by one or more processors 299 to perform various actions or functions of mobile computing device 202.

One or more storage components 248 within mobile computing device 202 may store information for processing during operation of mobile computing device 202. That is, mobile computing device 202 may store data accessed by UI module 206 and artificial intelligence model 290 during execution at mobile computing device 202. In some examples, storage component 248 is a temporary memory, meaning that a primary purpose of storage component 248 is not long-term storage. Storage components 248 on mobile computing device 202 may be configured for short-term storage of information as volatile memory and therefore may not retain stored contents if powered off. Examples of volatile memories include random access memories (RAM), dynamic random-access memories (DRAM), static random access memories (SRAM), and other forms of volatile memories known in the art.

Storage components 248, in some examples, also include one or more computer-readable storage media. Storage components 248 may be configured to store larger amounts of information than volatile memory. Storage components 248 may further be configured for long-term storage of information as non-volatile memory space and may retain information after power on/off cycles. Examples of non-volatile memories include magnetic hard disks, optical discs, floppy discs, flash memories, or forms of electrically programmable memories (EPROM) or electrically erasable and programmable (EEPROM) memories. Storage components 248 may store program instructions and/or information (e.g., data) associated with UI module 206 and artificial intelligence model 290.

One or more processors 299 may be configured to execute functionality of ask-to-hold framework 100 of FIG. 1 in conjunction with use of UI module 206 and artificial intelligence model 290 to perform any combination of techniques described in this disclosure. For example, one or more processors 299 may be configured to execute functionality of ask-to-hold framework 100 of FIG. 1 to determine a phone call is received while wearable computing device 103 is communicably interfaced with mobile computing device 202 via communication link to wearable computing device 205. In response, the processors may send one or more user-selectable options 217 to application GUI 254 via phone application 253 to enable a user to selectively activate the ask-to-hold feature. Responsive to obtaining input indicating the user has selected one of user-selectable options 217 corresponding to the ask-to-hold feature, one or more processors 299 may be configured to connect the incoming phone call with mobile computing device 202 and place the call on hold. AI model 290 may generate and send message 222 to a caller indicating a party the caller is attempting to reach will join the call shortly. One or more processors 299 may optionally configure phone application 253 to display countdown timer 146 of FIG. 1 to wearable computing device 103 via application GUI 254 utilizing communication link to wearable computing device 205.

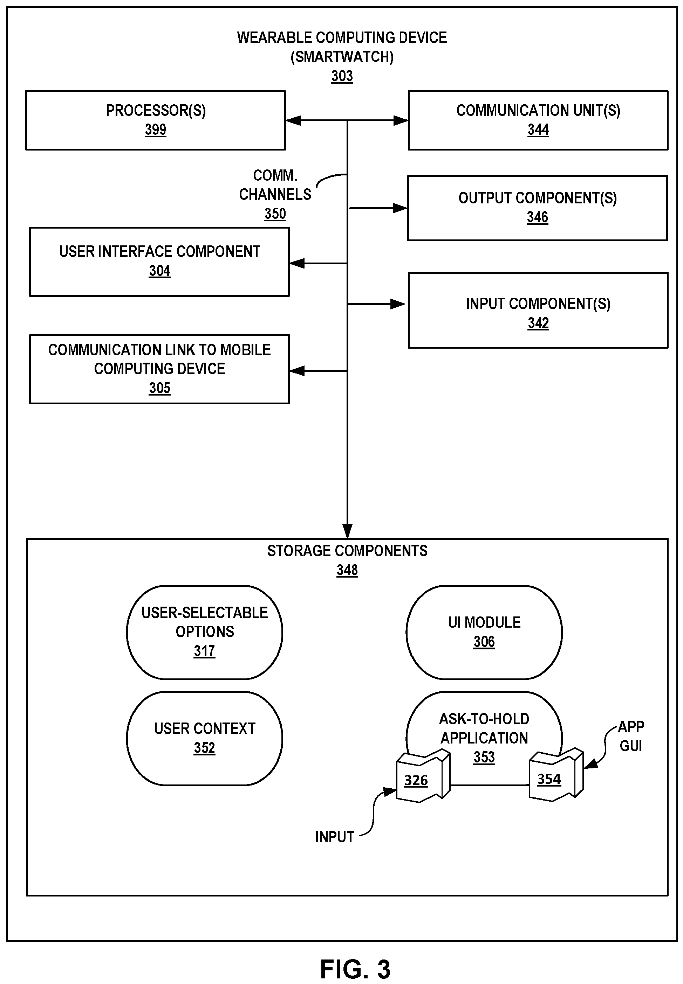

FIG. 3 is a block diagram illustrating further details of an example wearable computing device 303 (e.g., a smartwatch), in accordance with one or more aspects of the present disclosure. Wearable computing device 303 of FIG. 3 may serve as an example of wearable computing device 103 as illustrated in FIG. 1.

Wearable computing device 303 may be an example of any type of wearable computing device configured to communicate with a network, such as a local network (e.g., BLUETOOTH, WI-FI, a mesh network) or a public Internet. FIG. 3 illustrates one particular example of wearable computing device 303. Other examples of wearable computing device 303 may include a wearable smartwatch, a wearable smart band, a wearable smart ring, wearable eyeglasses, a wearable virtual-reality headset, wearable sports attire, or wearable ear-pods. Such other examples may include a subset of components included in example wearable computing device 303 or may include additional components not shown in FIG. 3.

As shown in the example of FIG. 3, wearable computing device 303 includes a user interface component (UIC) 304, one or more processors 399, one or more input components 342, one or more communication units 344, one or more output components 346, a communication link to mobile computing device 305 (e.g., such as device pairing 106), and one or more storage components 348. Storage components 348 of wearable computing device 303 may also include user interface (UI) module 306, user-selectable options 317, input 326 indicative of user interactions with user-selectable options 317, user context 352, and an ask-to-hold application 353. The ask-to-hold application 353 may be enabled to provide an application graphical user interface (GUI) 354 and to receive input 326 responsive to output of user-selectable options 317 displayed to wearable computing device 303.

One or more processors 399 are one example of processing circuitry 199B of FIG. 1. UI module 306, as shown in the example of FIG. 3, may be operable by wearable computing device 303 to perform one or more functions, such as receiving input and sending indications of such input to other components associated with wearable computing device 303, including mobile computing device 102 (of FIG. 1) linked via communication link to mobile computing device 305, and/or available application modules. UI module 306 may also receive data from components associated with wearable computing device 303, such as user context 352 and/or available application modules. Using the data received, UI module 306 may cause other components associated with wearable computing device 303, such as UI component 304, to provide output based on the data. For instance, UI module 306 may receive data from a communicably interfaced mobile computing device 102 to display a graphical user interface (GUI).

Communication link to mobile computing device 305 is an example of device pairing 106 of FIG. 1. AI model 290 is an example of AI model 190 of FIG. 1. Messages 222 may be an example of user selectable options 117 of FIG. 1, which may be output for display to mobile computing device 202 (e.g., mobile computing device 102 of FIG. 1) and/or wearable computing device 103 of FIG. 1. User-selectable options 217 may be an example of user-selectable options 117 of FIG. 1. Application GUI 354 may enable output to display 170B of wearable computing device 103 of FIG. 1.

Communication channels 350 may interconnect each of components 399, 304, 305, 344, 346, 342, and 348 for inter-component communications (e.g., physically, communicatively, and/or operatively). In some examples, communication channels 350 may include a system bus, a network connection, an inter-process communication data structure, or any other method for communicating data.

One or more input components 342 of wearable computing device 303 may receive input. Examples of input include tactile input, an audio input, and a video input. One or more input components 342 of wearable computing device 303, in one example, may include a presence-sensitive display, a touch-sensitive screen, a mouse, a keyboard, a voice responsive system, a video camera, a microphone, or any other type of device for detecting input from a human or a machine.

One or more output components 346 of wearable computing device 303 may generate output. Examples of output include tactile output, an audio output, and a video output. One or more output components 346 of wearable computing device 303, in one example, may include a presence-sensitive display, a sound card, a video graphics adapter card, a speaker, a liquid crystal display (LCD), a light-emitting diode (LED) display, a miniLED display, a microLED display, an organic light-emitting diode (OLED) display, a light field display, haptic motors, linear actuating devices, or any other type of device for generating output to a human or a machine.

One or more communication units 344 of wearable computing device 303 may communicate with external devices, including mobile computing device 102 via communication link to mobile computing device 305, via one or more wired and/or wireless networks by transmitting and/or receiving network signals on one or more networks. Examples of one or more communication units 344 include a network interface card (e.g., an Ethernet card), an optical transceiver, a radio frequency transceiver, a GPS receiver, or any other type of device that can send and/or receive information. Other examples of one or more communication units 344 may include short wave radios, cellular data radios, wireless network radios, as well as universal serial bus (USB) controllers.

UIC 304 of wearable computing device 303 may be hardware that functions as an input and/or output device for wearable computing device 303. For example, UIC 304 may include a display component, which may be a screen at which information is displayed by UIC 304, and a presence-sensitive input component that may detect an object at and/or near a display component of wearable computing device 303.

One or more processors 399 may implement functionality and/or execute instructions within wearable computing device 303. For example, one or more processors 399 on wearable computing device 303 may receive and execute instructions stored by storage components 348 that execute functionality of ask-to-hold framework 100 of FIG. 1. This may include providing input 326 responsive to user-selectable options 317 to activate an ask-to-hold feature and generating output for display to wearable computing device 303 and/or mobile computing device 102 of FIG. 1. Instructions executed by one or more processors 399 may cause wearable computing device 303 to store information within storage components 348 during program execution. Examples of one or more processors 399 include application processors, display controllers, sensor hubs, and any other hardware configured to function as a processing unit. One or more processors 399 may execute instructions of UI module 306 and ask-to-hold application 353 to perform actions or functions. That is, UI module 306 and ask-to-hold application 353 may be operable by one or more processors 399 to perform various actions or functions of wearable computing device 303, including receiving and returning input 326 to mobile computing device 102 of FIG. 1 responsive to variously displayed user-selectable options 317.

One or more storage components 348 within wearable computing device 303 may store information for processing during operation of wearable computing device 303. That is, wearable computing device 303 may store data accessed by UI module 306 and ask-to-hold application 353 during execution at wearable computing device 303. In some examples, storage component 348 is a temporary memory, meaning that a primary purpose of storage component 348 is not long-term storage. Storage components 348 on wearable computing device 303 may be configured for short-term storage of information as volatile memory and therefore may not retain stored contents if powered off. Examples of volatile memories include random access memories (RAM), dynamic random-access memories (DRAM), static random-access memories (SRAM), and other forms of volatile memories known in the art.

Storage components 348, in some examples, also include one or more computer-readable storage media. Storage components 348 may be configured to store larger amounts of information than volatile memory. Storage components 348 may further be configured for long-term storage of information as non-volatile memory space and may retain information after power on/off cycles. Examples of non-volatile memories include magnetic hard disks, optical discs, floppy discs, flash memories, or forms of electrically programmable memories (EPROM) or electrically erasable and programmable (EEPROM) memories. Storage components 348 may store program instructions and/or information (e.g., data) associated with UI module 306 and ask-to-hold application 353.

One or more processors 399 may be configured to execute functionality of ask-to-hold framework 100 of FIG. 1 in conjunction with use of UI module 306 and ask-to-hold application 353 to perform any combination of techniques described in this disclosure. For example, one or more processors 399 may be configured to execute functionality of ask-to-hold framework 100 of FIG. 1 to display user-selectable options 317 as output and to receive input 326 responsive to user-selectable options 317 while a mobile computing device is communicably interfaced with wearable computing device 303 via communication link to mobile computing device 305. Responsive to obtaining input 326 indicating the user has selected one of user-selectable options 317 corresponding to an ask-to-hold feature, one or more processors 399 may be configured to return input 326 to a mobile computing device communicably paired with wearable computing device 303, responsive to which the mobile computing device may connect the telephone call and place the call on hold. One or more processors 399 may optionally configure ask-to-hold application 353 to display countdown timer 146 of FIG. 1 via application GUI 354.

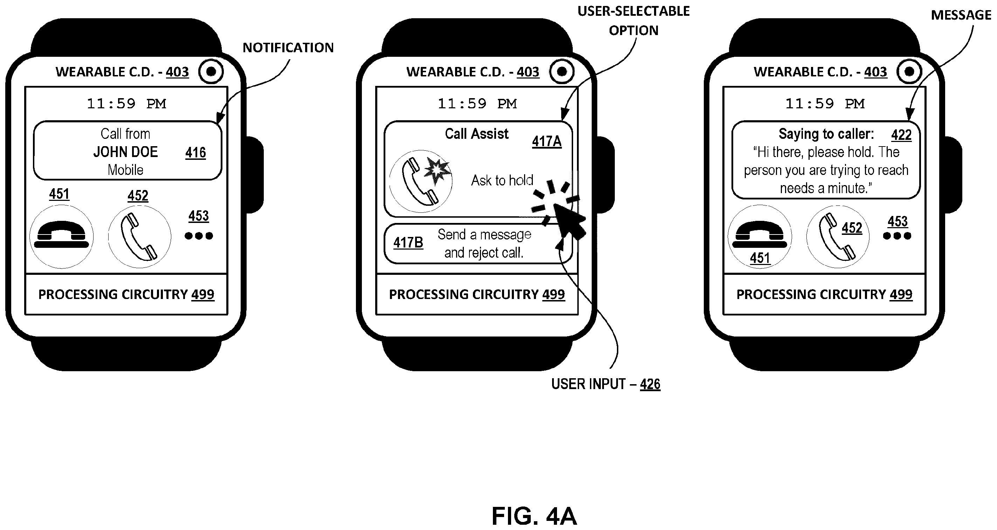

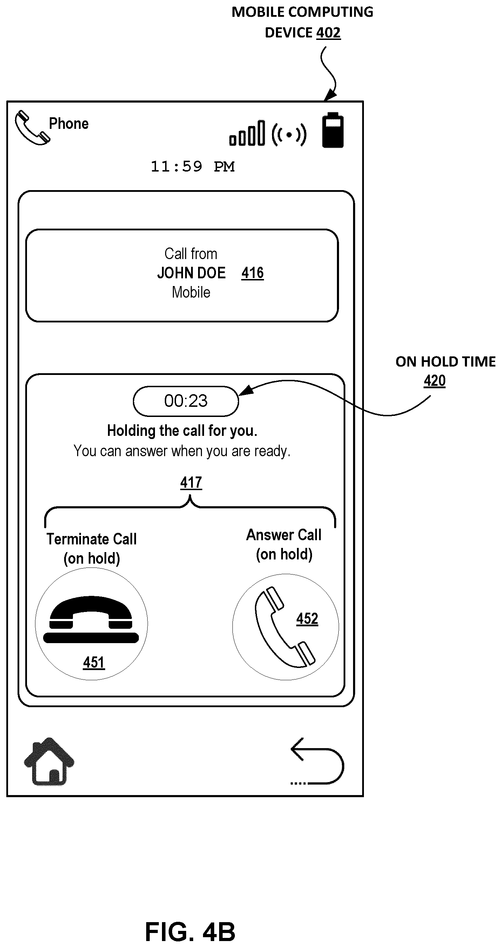

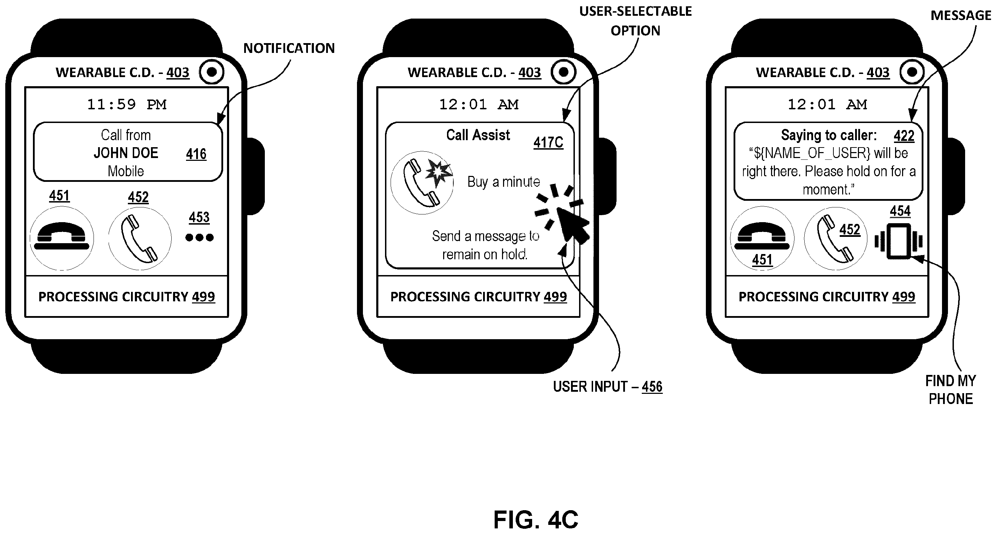

FIGS. 4A-4C are conceptual diagrams illustrating example graphical user interfaces and interactions, in accordance with aspects of this disclosure. FIGS. 4A, 4B, and 4C are described with respect to mobile computing device 102 and wearable computing device 103 of FIG. 1, mobile computing device 202 of FIG. 2 (e.g., a smartphone), and wearable computing device 303 of FIG. 3 (e.g., a smartwatch).

With reference to FIG. 4A, as described above, when mobile computing device 102 (or 202) is communicably interfaced with wearable computing device 403 (which may be an example of wearable computing device 103 of FIG. 1 or 303 of FIG. 3) and receives a telephone call, mobile computing device 102 may send notification 416 as output for display to wearable computing device 403. As depicted at the left-hand side of FIG. 4A, wearable computing device 403 may include processing circuitry 499 (which may be an example of processing circuitry 199B of FIG. 1 or processors 399 of FIG. 3) configured to output for display notification 416, indicating a call from "John Doe's Mobile" is received. Additionally depicted is the hang-up icon depicting selectable action 451 to reject the telephone call, and the answer icon depicting selectable action 452 to answer the telephone call. Three-dot menu 453 indicates more options.

The middle portion of FIG. 4A depicts processing circuitry 499 of wearable computing device 403 configuring for display the output of user-selectable options 417A and 417B. User-selectable option 417A provides a call assist feature which enables the user to ask the caller to hold by activating the "ask-to-hold" feature of ask-to-hold framework 100 of FIG. 1. User-selectable option 417B provides the user with an option to send a message to a caller and reject the call without answering the call or connecting the call with mobile computing device 102. As depicted here, user input 426 (which may be an example of input 126 of FIG. 1 or input 326 of FIG. 3) indicates the user has selected the call assist feature corresponding to user-selectable option 417A.

The right-hand side of FIG. 4A depicts wearable computing device 403 in which message 422 is referenced by ask-to-hold framework 100 of FIG. 1 as having been sent to the caller. Responsive to obtaining input 426 indicating the user has selected user-selectable option 417A to activate the ask-to-hold feature, mobile computing device 102 (or 202) obtains the input (e.g., wearable computing device 403 returns input 426 to mobile computing device 102) and mobile computing device 102 responsively connects the telephone call and places the telephone call on hold. Ask-to-hold framework 100 of FIG. 1 also sends message 422 to the caller. As shown here, the user may be informed of message 422 sent to the caller, with the user interface (UI) of wearable computing device 403 indicating that ask-to-hold framework 100 of FIG. 1 is conveying to the caller: "Hi there, please hold. The person you are trying to reach needs a minute."

With reference to FIG. 4B, as described above, when mobile computing device 402 (which may be an example of mobile computing device 102 of FIG. 1 or 202 of FIG. 2) is communicably interfaced with wearable computing device 403 and receives a telephone call, mobile computing device 402 may display notification 416 in addition to output of such notification 416 to wearable computing device 403. Here, notification 416 indicates there is a call from "John Doe's Mobile." User-selectable options 417 are provided, including a selectable action 451 to terminate the call (which is on hold) and a selectable action 452 to answer the call (which is on hold). On hold time 420 indicates the duration the phone call has been connected with mobile computing device 402 and maintained on hold.

With reference to FIG. 4C, on the left-hand side, wearable computing device 403 may include processing circuitry 499, which configures output of notification 416 for display, indicating there continues to be a call from "John Doe's Mobile." Consider a phone call that was previously received and placed on hold responsive to input 426, indicating a user interaction at wearable computing device 403 requesting, via user-selectable option 417A, to activate an ask-to-hold feature. The middle portion of FIG. 4C illustrates wearable computing device 403 with such a phone call previously connected and placed on hold, but not yet answered or terminated. Here, user input 456 (e.g., second user input, which may be an example of input 156 of FIG. 1 or input 326 of FIG. 3) is obtained, indicating via user-selectable option 417C that the user is requesting to "buy a minute" from a call assistant. Responsive to obtaining user input 456, ask-to-hold framework 100 may maintain the previously connected phone call on hold and send a message to the caller to remain on hold. At the right-hand side of FIG. 4C, wearable computing device 403 depicts message 422, saying to the caller: "${NAME_OF_USER} will be right there. Please hold on for a moment." The name of the user may be obtained by AI model 190 of FIG. 1 (or AI model 290 of FIG. 2) based on contextually relevant information accessible via mobile computing device 102, such as the user's profile. Additionally depicted at the right-hand side is icon 454 providing a user-selectable action via which to trigger or activate a find-my-phone feature. The find-my-phone feature may trigger, from wearable computing device 403, an audible alert, a ring, an audible homing beacon, and/or vibrating of the user's communicably interfaced mobile computing device 102 to assist the user with locating their phone.

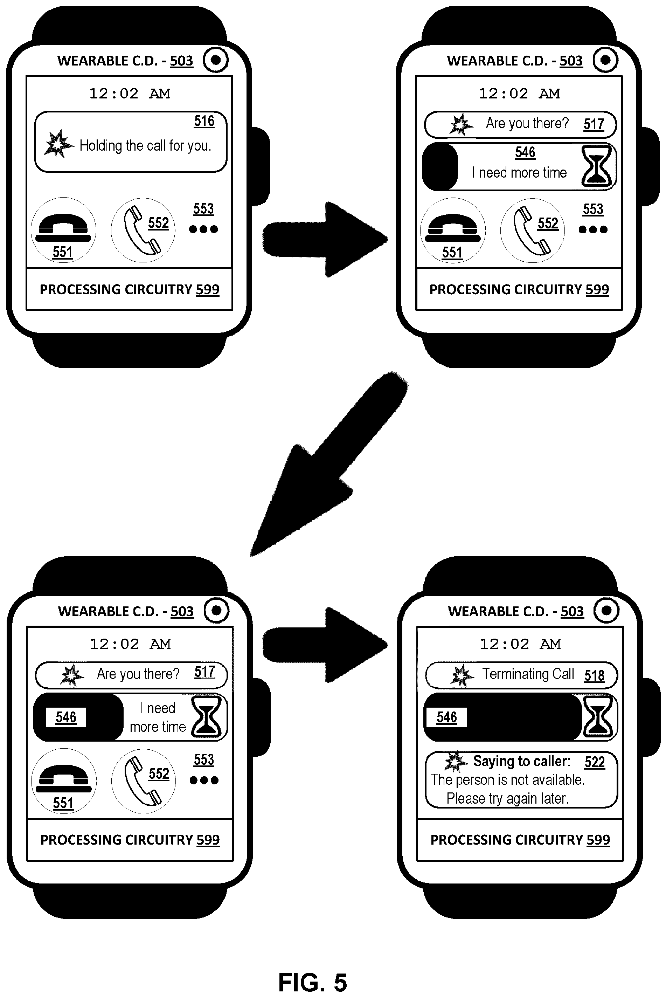

FIG. 5 is a conceptual diagram illustrating example graphical user interfaces, in accordance with aspects of this disclosure. With reference to FIG. 5, as described above, when mobile computing device 102 (or 202 of FIG. 2) is communicably interfaced with a wearable computing device (which may be an example of wearable computing device 103 of FIG. 1, 303 of FIG. 3, 403 of FIGS. 4A-4C, or 503 of FIG. 5) and receives a telephone call which is placed on hold due to activation of an ask-to-hold feature, ask-to-hold framework 100 of FIG. 1, using processing circuitry 599 of wearable computing device 503, may output, for display, countdown timer 546 while maintaining the phone call on hold for the user.

As depicted in the upper left of FIG. 5, wearable computing device 503 may display notification 516, indicating that a call assistant is holding the call for the user. Wearable computing device 503 may again provide icon 551 to terminate the call, icon 552 to answer the call, and icon 553 with more options, while the call is on hold. At the upper right of FIG. 5, wearable computing device 503 may display notification 517 asking "Are you there?" to the user, while progressing countdown timer 546. The user may be permitted to interact with a user-selectable option indicating "I need more time" which, if selected, may reset countdown timer 546, extend countdown timer 546, pause countdown timer 546, or dismiss countdown timer 546, depending on the chosen user configuration and software settings. At the lower left of FIG. 5, countdown timer 546 may progress further. As before, wearable computing device 503 may display notification 517 asking "Are you there?" to the user, while progressing countdown timer 546. The user may again be permitted to interact with a user-selectable option indicating "I need more time." At the lower right of FIG. 5, countdown timer 546 may have expired (e.g., time is exhausted), and a call assistant may indicate via notification 518 that it is terminating the call previously placed on hold. The call assistant may indicate it is sending message 522 to the caller saying: "The person is not available. Please try again later." If message 522 is an audible message transmitted from mobile computing device 102 over the voice channel via the connected phone call while on hold, then the message may be sent prior to termination of the phone call. However, if message 522 is a text message transmitted from mobile computing device 102 over a separate communication channel, then the text message may be sent before, after, or concurrent with terminating the phone call, as the voice channel may not be needed. In some examples, ask-to-hold framework 100 of FIG. 1 may send both a text and an audible message 522 to the caller device having originated the phone call to mobile computing device 102.

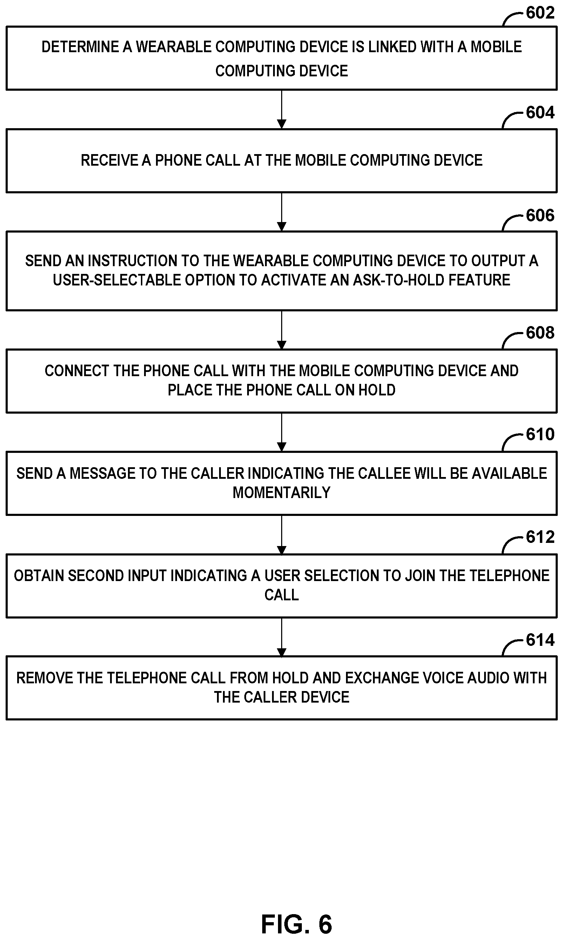

FIG. 6 is a flowchart illustrating example operations performed by an example computing device that is configured in accordance with one or more aspects of the present disclosure. FIG. 6 is described below in the context of ask-to-hold framework 100 of FIG. 1, mobile computing device 202 of FIG. 2, and wearable computing device 303 of FIG. 3.

As shown in FIG. 6, one or more processors (such as one or more processors 299 of mobile computing device 202) may determine that a wearable computing device (such as wearable computing device 303) is communicably linked with a mobile computing device (such as mobile computing device 202) (602).

One or more processors 299 may receive a phone call at mobile computing device 202 (604).

While mobile computing device 202 is communicably linked with wearable computing device 303 and in response to receiving the phone call at mobile computing device 202, one or more processors 299 may send an instruction to wearable computing device 303 to output a user-selectable option (such as user-selectable option 217 or 417A) to activate an ask-to-hold feature (606).

One or more processors 299 may receive first input (such as input 126 or 426) from wearable computing device 303 indicating the ask-to-hold feature was activated (608). Responsive to receiving this input from wearable computing device 303, one or more processors 299 may connect the phone call with mobile computing device 202 and place the phone call on hold.

While the phone call is on hold and connected with mobile computing device 202, one or more processors 299 may send a message (such as message 222 or 422) to the caller device that originated the phone call, indicating the callee will be available momentarily (610).

While the phone call is on hold and connected with mobile computing device 202, one or more processors 299 may obtain second input (such as input 156 or 456) at mobile computing device 202 indicating a user selection to join the phone call (612).

Responsive to obtaining the second input at mobile computing device 202 indicating the user selection to join the phone call, one or more processors 299 may remove the phone call from hold and exchange voice audio between mobile computing device 202 and the caller device (614).This disclosure includes the following examples.

Example 1 - A method comprising: receiving, by one or more processors, a phone call at a computing device; while the computing device is communicably linked with a wearable computing device and in response to receiving the phone call at the computing device, sending, by the one or more processors, an instruction to the wearable computing device to output a user-selectable option to activate an ask-to-hold feature; receiving, by the one or more processors, first input from the wearable computing device indicating the ask-to-hold feature was activated; responsive to receiving the first input from the wearable computing device indicating the ask-to-hold feature was activated, connecting, by the one or more processors, the phone call with the computing device and placing the phone call on hold; while the phone call is on hold and connected with the computing device, sending, by the one or more processors, a message to a caller device having originated the phone call indicating a callee will be available momentarily; while the phone call is on hold and connected with the computing device, obtaining, by the one or more processors, second input at the computing device indicating a user selection to join the phone call; and responsive to obtaining the second input at the computing device indicating the user selection to join the phone call, removing, by the one or more processors, the phone call from hold and exchanging voice audio between the computing device and the caller device.

Example 2 - The method of example 1, further comprising: while the phone call is on hold and connected with the computing device, sending, by the one or more processors, a second instruction to the wearable computing device to output a countdown timer indicating a period of time until the phone call is terminated if unanswered.

Example 3 - The method of example 2, further comprising: while the phone call is on hold and connected with the computing device, determining, by the one or more processors, the countdown timer has expired based on the period of time until the phone call is terminated satisfying a termination threshold; and responsive to the period of time until the phone call is terminated satisfying the termination threshold: sending, by the one or more processors, a second message to the caller device indicating the callee is unavailable; and terminating, by the one or more processors, the phone call from the computing device.

Example 4 - The method of example 2, wherein, subsequent to outputting the countdown timer indicating a period of time until the phone call is terminated if unanswered: obtaining, by processing circuitry of the wearable computing device, a third input indicating a request to extend the countdown timer; and outputting, by the processing circuitry of the wearable computing device, for display by the wearable computing device, an update to the countdown timer indicating additional time until the phone call is terminated if unanswered.

Example 5 - The method of example 4, further comprising: receiving, by the one or more processors of the computing device, an indication of the third input from the wearable computing device indicating the request to extend the countdown timer; and responsive to receipt of the indication of the third input from the wearable computing device, sending, by the one or more processors, a third message from the computing device to the caller device indicating the callee needs additional time.

Example 6 - The method of example 1, further comprising: while the phone call is on hold and connected with the computing device, obtaining, by the one or more processors, a fourth input indicating a request to terminate the phone call without the callee joining the phone call; and responsive to obtaining the fourth input indicating the request to terminate the phone call, terminating, by the one or more processors, the phone call from the computing device.

Example 7 - The method of example 6, further comprising: sending, by the one or more processors, a fourth message to the caller device indicating the callee is unavailable; wherein sending the fourth message to the caller device includes one of: sending an audible message over a voice channel of the phone call connected with the computing device prior to terminating the phone call from the computing device; or sending a text message to the caller device before, after, or concurrent with terminating the phone call from the computing device.

Example 8 - The method of example 1, wherein: the computing device is a smartphone; and the wearable computing device is selected from at least one of: a wearable smartwatch; a wearable smart band; a wearable smart ring; wearable eyeglasses; a wearable virtual-reality headset; wearable sports attire; or wearable ear-pods.

Example 9 - The method of example 1, further comprising: generating, by the one or more processors using an AI model accessible to the computing device, the message to the caller device having originated the phone call indicating the callee will be available momentarily; and transmitting, by the one or more processors, the message as generated by the AI model from the computing device to the caller device over a voice channel of the phone call while the phone call is on hold and connected with the computing device.

Example 10 - The method of example 1, further comprising: while the phone call is on hold and connected with the computing device, transmitting, by the one or more processors, hold music from the computing device to the caller device over a voice channel of the phone call.

Example 11 - The method of example 1, further comprising: while the phone call is on hold and connected with the computing device, receiving, by the one or more processors, a fifth input from the wearable computing device indicating a request to activate a find-my-phone feature; and responsive to receiving the fifth input from the wearable computing device indicating the request to activate the find-my-phone feature, triggering, by the one or more processors and for output by the computing device, an audible sound from a speaker of the computing device or a haptic vibration pattern from a haptic actuator of the computing device, or both.

Example 12 - A computing device comprising: a display device; one or more processors; and non-transitory computer readable media that stores instructions that, when executed, configure the one or more processors to: determine a wearable computing device is communicably linked with the computing device; receive a phone call at the computing device; while the computing device is communicably linked with the wearable computing device and in response to receipt of the phone call at the computing device, send an instruction to the wearable computing device to output a user-selectable option to activate an ask-to-hold feature; receive first input from the wearable computing device indicating the ask-to-hold feature was activated; responsive to receipt of the first input from the wearable computing device indicating the ask-to-hold feature was activated, connect the phone call with the computing device and place the phone call on hold; while the phone call is on hold and connected with the computing device, send a message to a caller device having originated the phone call indicating a callee will be available momentarily; while the phone call is on hold and connected with the computing device, obtain second input at the computing device indicating a user selection to join the phone call; and responsive to obtaining the second input at the computing device indicating the user selection to join the phone call, remove the phone call from hold and exchange voice audio between the computing device and the caller device.

Example 13 - The computing device of example 12, wherein the instructions, when executed, further configure the one or more processors to: while the phone call is on hold and connected with the computing device, send a second instruction to the wearable computing device to output a countdown timer indicating a period of time until the phone call is terminated if unanswered.

Example 14 - The computing device of example 13, wherein the instructions, when executed, further configure the one or more processors to: receive, at the computing device, an indication of a third input from the wearable computing device indicating a request to extend the countdown timer; and responsive to receipt of the indication of the third input from the wearable computing device, send a third message from the computing device to the caller device indicating the callee needs additional time.

Example 15 - The computing device of example 13, wherein the instructions, when executed, further configure the one or more processors to: while the phone call is on hold and connected with the computing device, determine the countdown timer has expired based on the period of time until the phone call is terminated satisfying a termination threshold; and responsive to the period of time until the phone call is terminated satisfying the termination threshold: send a second message to the caller device indicating the callee is unavailable; and terminate the phone call from the computing device.

Example 16 - The computing device of example 12, wherein the instructions, when executed, further configure the one or more processors to: while the phone call is on hold and connected with the computing device, obtain a fourth input indicating a request to terminate the phone call without the callee joining the phone call; and responsive to obtaining the fourth input indicating the request to terminate the phone call, terminate the phone call from the computing device.

Example 17 - The computing device of example 16, wherein the instructions, when executed, further configure the one or more processors to: send a fourth message to the caller device indicating the callee is unavailable; wherein to send the fourth message to the caller device includes the instructions, when executed, to configure the one or more processors to: send an audible message over a voice channel of the phone call connected with the computing device prior to terminating the phone call from the computing device; or send a text message to the caller device before, after, or concurrent with terminating the phone call from the computing device.

Example 18 - The computing device of example 12, wherein: the computing device is a smartphone; and the wearable computing device is selected from at least one of: a wearable smartwatch; a wearable smart band; a wearable smart ring; wearable eyeglasses; a wearable virtual-reality headset; wearable sports attire; or wearable ear-pods.

Example 19 - The computing device of example 12, wherein the instructions, when executed, further configure the one or more processors to: generate, using an AI model accessible to the computing device, the message to the caller device having originated the phone call indicating the callee will be available momentarily; and transmit the message as generated by the AI model from the computing device to the caller device over a voice channel of the phone call while the phone call is on hold and connected with the computing device.

Example 20 - The computing device of example 12, wherein the instructions, when executed, further configure the one or more processors to: while the phone call is on hold and connected with the computing device, transmit hold music from the computing device to the caller device over a voice channel of the phone call.

Example 21 - A computer program product comprising one or more instructions that, when executed by at least one processor, cause the at least one processor to perform any of the methods of examples 1-11.

Example 22 - The computing device of example 12, further comprising means for performing any combination of the methods of examples 2-11.

By way of example, and not limitation, such computer-readable storage media can comprise RAM, ROM, EEPROM, CD-ROM or other optical disk storage, magnetic disk storage, or other magnetic storage devices, flash memory, or any other storage medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage mediums and media and data storage media do not include connections, carrier waves, signals, or other transient media, but are instead directed to non-transient, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of a computer-readable medium.

Instructions may be executed by one or more processors, such as one or more digital signal processors (DSPs), general purpose microprocessors, application specific integrated circuits (ASICs), field programmable logic arrays (FPGAs), or other equivalent integrated or discrete logic circuitry. Accordingly, the term "processor," as used herein may refer to any of the foregoing structures or any other structures suitable for implementation of the techniques described herein. In addition, in some aspects, the functionality described herein may be provided within dedicated hardware and/or software modules. Also, the techniques could be fully implemented in one or more circuits or logic elements.

The techniques of this disclosure may be implemented in a wide variety of devices or apparatuses, including a wireless handset, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a hardware unit or provided by a collection of interoperative hardware units, including one or more processors as described above, in conjunction with suitable software and/or firmware.

Various embodiments have been described. These and other embodiments are within the scope of the following claims.

## Claims

1. A method comprising:
receiving, by one or more processors, a phone call at a computing device;
while the computing device is communicably linked with a wearable computing device and in response to receiving the phone call at the computing device, sending, by the one or more processors, an instruction to the wearable computing device to output a user-selectable option to activate an ask-to-hold feature;
receiving, by the one or more processors, first input from the wearable computing device indicating the ask-to-hold feature was activated;
responsive to receiving the first input from the wearable computing device indicating the ask-to-hold feature was activated, connecting, by the one or more processors, the phone call with the computing device and placing the phone call on hold;
while the phone call is on hold and connected with the computing device, sending, by the one or more processors, a message to a caller device having originated the phone call indicating a callee will be available momentarily;
while the phone call is on hold and connected with the computing device, obtaining, by the one or more processors, second input at the computing device indicating a user selection to join the phone call; and
responsive to obtaining the second input at the computing device indicating the user selection to join the phone call, removing, by the one or more processors, the phone call from hold and exchanging voice audio between the computing device and the caller device.

2. The method of claim 1, further comprising:
while the phone call is on hold and connected with the computing device, sending, by the one or more processors, a second instruction to the wearable computing device to output a countdown timer indicating a period of time until the phone call is terminated if unanswered.

3. The method of claim 2, further comprising:
while the phone call is on hold and connected with the computing device, determining, by the one or more processors, the countdown timer has expired based on the period of time until the phone call is terminated satisfying a termination threshold; and
responsive to the period of time until the phone call is terminated satisfying the termination threshold:
sending, by the one or more processors, a second message to the caller device indicating the callee is unavailable; and
terminating, by the one or more processors, the phone call from the computing device.

4. The method of claim 2 or claim 3, wherein, subsequent to outputting the countdown timer indicating a period of time until the phone call is terminated if unanswered:
obtaining, by processing circuitry of the wearable computing device, a third input indicating a request to extend the countdown timer; and
outputting, by the processing circuitry of the wearable computing device, for display by the wearable computing device, an update to the countdown timer indicating additional time until the phone call is terminated if unanswered.

5. The method of claim 4, further comprising:
receiving, by the one or more processors of the computing device, an indication of the third input from the wearable computing device indicating the request to extend the countdown timer; and
responsive to receipt of the indication of the third input from the wearable computing device, sending, by the one or more processors, a third message from the computing device to the caller device indicating the callee needs additional time.

6. The method of any one of the preceding claims, further comprising:
while the phone call is on hold and connected with the computing device, obtaining, by the one or more processors, a fourth input indicating a request to terminate the phone call without the callee joining the phone call; and
responsive to obtaining the fourth input indicating the request to terminate the phone call, terminating, by the one or more processors, the phone call from the computing device.

7. The method of claim 6, further comprising:
sending, by the one or more processors, a fourth message to the caller device indicating the callee is unavailable;
wherein sending the fourth message to the caller device includes one of:
sending an audible message over a voice channel of the phone call connected with the computing device prior to terminating the phone call from the computing device; or
sending a text message to the caller device before, after, or concurrent with terminating the phone call from the computing device.

8. The method of any one of the preceding claims:
wherein the computing device is a smartphone; and
wherein the wearable computing device is selected from at least one of:
a wearable smartwatch;
a wearable smart band;
a wearable smart ring;
wearable eyeglasses;
a wearable virtual-reality headset;
wearable sports attire; or
wearable ear-pods.

9. The method of any one of the preceding claims, further comprising:
generating, by the one or more processors using an AI model accessible to the computing device, the message to the caller device having originated the phone call indicating the callee will be available momentarily; and
transmitting, by the one or more processors, the message as generated by the AI model from the computing device to the caller device over a voice channel of the phone call while the phone call is on hold and connected with the computing device.

10. The method of any one of the preceding claims, further comprising:
while the phone call is on hold and connected with the computing device, transmitting, by the one or more processors, hold music from the computing device to the caller device over a voice channel of the phone call.

11. The method of any one of the preceding claims, further comprising:
while the phone call is on hold and connected with the computing device, receiving, by the one or more processors, a fifth input from the wearable computing device indicating a request to activate a find-my-phone feature; and
responsive to receiving the fifth input from the wearable computing device indicating the request to activate the find-my-phone feature, triggering, by the one or more processors and for output by the computing device, an audible sound from a speaker of the computing device or a haptic vibration pattern from a haptic actuator of the computing device, or both.

12. A computing device comprising:
a display device;
one or more processors; and
non-transitory computer readable media that stores instructions that, when executed, configure the one or more processors to determine a wearable computing device is communicably linked with the computing device and perform the method of any one of the preceding claims.

13. A computer program product comprising one or more instructions that, when executed by at least one processor, cause the at least one processor to perform the method of any one of claims 1 to 11.
